# EUROPEAN PATENT APPLICATION

(11) **EP 4 703 680 A1**
(43) Date of publication of application: **04.03.2026**
(21) Application number: 24197906.1
(22) Date of filing: 02.09.2024
(51) Int. Cl.: G01C 21/00

(54) **METHOD AND APPARATUS FOR ANALYSIS OF ROAD NETWORKS**

(71) Applicant: TomTom Global Content B.V., 1011 AC Amsterdam (NL)
(72) Inventor: HOUBRAKEN, Maarten Henri Rita Paul, 1011 AC Amsterdam (NL); VERHEYEN, Koen, 1011 AC Amsterdam (NL); COENEN, Stijn Nick Rolf, 1011 AC Amsterdam (NL)
(74) Representative: Bardehle Pagenberg Partnerschaft mbB Patentanwälte Rechtsanwälte

(57) **Abstract**

A computer-implemented method to rank a plurality of maneuvers in a road network is disclosed. The road network comprising a set of nodes and a set of roads, where each of the roads of the set of roads is arranged to connect two neighboring nodes of the set of nodes. The method comprising associating a value with each of one or more maneuvers available at a central node of the set of nodes; selecting a path between a pair of nodes of the set of nodes based on a predefined criterion; and changing the value associated with a respective maneuver from the one or more maneuvers at the central node when the respective maneuver is part of the selected path.

## Description

### INTRODUCTION

Aspects of the present disclosure generally relate to analyses of road networks, and more particularly to techniques and apparatuses for evaluating driving behavior in road networks.

In today's world, where the road network is constantly evolving and the use of navigation systems (e.g., for vehicles) has become a common practice, accuracy of real-time maps helps users to arrive at their destination quicker and also reduces traffic jams, particularly in densely populated areas. As drivers rely increasingly on navigation systems and apps for efficient and safe travel, any discrepancies or inaccuracies in the maps can lead to confusion, frustration, and even hazardous situations on the road. One key aspect of real-time map correctness involves the prompt detection of changes in the road network, such as newly added or removed turn restrictions, to ensure that navigation instructions remain accurate and reliable.

Consider, for instance, the scenario of detecting turn restrictions in real-time map analysis. Simply observing driving behavior, such as the number of maneuvers over an intersection, may not provide a conclusive indication of whether a particular turn is prohibited or merely less preferred due to alternative routes. To address such a challenge, it is helpful to incorporate into the analysis additional factors, such as the expected traffic volume over an intersection in the road network. By doing so, it becomes possible to discern whether a low number of maneuvers at an intersection is indicative of a turn restriction or simply a result of alternative route preferences.

Estimating expected traffic volume involves predicting the likelihood of various maneuvers being executed if they were permitted, thus necessitating a comprehensive understanding of the local road network structure. However, evaluating such network structures, particularly in densely populated areas with intricate road layouts, has proven to be a difficult and time-consuming task. Prior art relies on large volumes of traffic data for accurate estimation, which may not always be readily available and can strain computational resources, leading to prolonged processing times and, ultimately, insufficient accuracy. Furthermore, prior art also relies on graph modeling, wherein graph modeling inherently simplifies large datasets by implicitly storing some information within the network topology. While graph modeling is simple - using only nodes, edges, and edge costs - the prior art requires complex algorithms to extract useful information from these models. For example, when finding the shortest path through the network, many more nodes and edges might be checked than those actually on the shortest path.

Therefore, the objective of the invention is to enhance the quality of digital maps by allowing for quicker and more accurate update of digital map information or properties, e.g., concerning particular elements of the map. Additionally, the objective of the invention is to enable a navigation device to propose paths quicker and with less computational power. In particular, the objective is to unlock some of the above-mentioned information within the network topology, for it to be used in improving map information without the need for those processes to dig deep in the network modelling themselves.

### SUMMARY

In some aspects of the present disclosure, a computer-implemented method to rank a plurality of maneuvers in a road network is disclosed, the road network comprising a set of nodes and a set of roads, where each of the roads of the set of roads is arranged to connect two neighboring nodes of the set of nodes, the method comprising associating a value with each of one or more maneuvers available at a central node of the set of nodes; selecting a path between a pair of nodes of the set of nodes based on a predefined criterion; and changing the value associated with a respective maneuver from the one or more maneuvers at the central node when the respective maneuver is part of the selected path.

Thus, the proposed method is capable of associating values with maneuvers in the network, wherein the value of a maneuver is e.g. related to the use of the maneuver for long and/or short distance travel and may therefore influences expected traffic volumes. These values may further be tightly linked to the network structure and/or topology.

In some aspects of the present disclosure, the method further comprises ranking the plurality of the maneuvers in the road network based on the value associated with the each of the plurality of maneuvers.

In some aspects of the present disclosure, the predefined criterion is based on a cost associated with the path between the pair of nodes.

In some aspects of the present disclosure, the cost associated with the path is based on one or more of: a length of the path, an expected time traveling on the path, a power consumption traveling on the path, and a toll fee for traveling on the path.

In some aspects of the present disclosure, a cost of a path between the pair of nodes is retrieved from a matrix or determined based on the matrix.

Retrieving the cost of a path between the pair of nodes retrieved from a matrix or determined the cost of the path based on the matrix allows to reduce the processing time as previous calculations of costs are reused and are not performed again. This reduces the number of redundant calculations.

In some aspects of the present disclosure, changing the value associated with the respective maneuver is based on the cost associated with the selected path.

In some aspects of the present disclosure, when the respective maneuver is not part of the selected path, the value associated with the respective maneuver is not changed.

Performing these steps to rank the maneuver reduces the processing time as the number of updates of the value associated with the respective maneuver is decreased.

In some aspects of the present disclosure, the method further comprises the method further comprises: determining a subset of the set of nodes, the subset of nodes including the central node; determining a subset of the set of roads of the network, the subset of roads including all roads directly connecting the nodes of the subset; determining a set of paths, wherein each path of the set of paths comprises one or more roads of the subset of roads and connects two nodes of the subset of nodes; and determining a subset of the set of paths, wherein each path in the subset has a cost lower than or equal to any other path between a same starting node of the path and a same target node of the path.

Performing these steps to rank the maneuver decreases the number of paths to be evaluated. Thus, the processing time of the ranking is reduced and a quicker and a more accurate update of digital map information is achieved.

In some aspects of the present disclosure, method further comprises: for each available maneuver at the central node, selecting, from all paths of the subset of paths including the maneuver, the path having the highest costs, and updating the value associated with the maneuver based on the cost of the selected path.

In some aspects of the present disclosure, changing the value does not decrease the value.

Not allowing the value associated with a maneuver to decrease reduces processing time, as it decreases the number of updates required for that value.

In some aspects of the present disclosure, changing the value associated with a respective maneuver further comprises: if the value exceeds a threshold, the value is set to a predefined value.

In some aspects of the present disclosure, the respective maneuver is excluded from further updates when the associated value is set to the predefined value.

Excluding maneuvers from update when the associated value is set to the predefined value is set to a predefined value allows to reduce the processing time as the number of paths to be evaluated is reduced.

In some aspects of the present disclosure, each of the plurality of maneuvers in the road network is a transition from a first road of the road network to a second road of the road network at a node of the road network.

In some aspects of the present disclosure, an apparatus for ranking maneuvers in a road network is disclosed, the apparatus comprising at least one processing unit configured to perform the method according to any of the previous aspects.

The foregoing has outlined rather broadly features of examples according to the present disclosure. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

### BRIEF DESCRIPTION OF THE DRAWINGS

So that the above-recited aspects of the present disclosure can be understood in detail, in the following, a more particular description is provided by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
In Fig. 1, a network in accordance with various aspects of the present disclosure is shown.
In Fig. 2, a process flow for ranking maneuvers of a road network in accordance with various aspects of the present disclosure is shown.
In Fig. 3, a process flow for ranking maneuvers of a road network in accordance with various aspects of the present disclosure is shown.
In Fig. 4, a network in accordance with various aspects of the present disclosure is shown.
In Fig. 5, a table in accordance with various aspects of the present disclosure is shown.
In Fig. 6, a network in accordance with various aspects of the present disclosure is shown.
In Fig. 7, a table in accordance with various aspects of the present disclosure is shown.
In Fig. 8, a network in accordance with various aspects of the present disclosure is shown.
In Fig. 9, a table in accordance with various aspects of the present disclosure is shown.

### DETAILED DESCRIPTION

Various aspects of the present disclosure are described in more detail hereinafter with reference to the accompanying drawings.

This disclosure may, however, be implemented in many different forms and should not be construed as limited to any specific structure or function presented throughout this disclosure. Rather, these aspects are provided so that this disclosure be thorough and complete and convey the scope of the present disclosure to those skilled in the art. Based on the teachings herein one skilled in the art should appreciate that the scope of the present disclosure is intended to cover different aspects, whether implemented independently of or combined. For example, an apparatus may be implemented, or a method may be practiced using a number of the aspects set forth herein. In addition, the scope of the present disclosure is intended to cover such an apparatus or method which is practiced using other structure, functionality, or structure and functionality in addition to or other than the various aspects of the present disclosure set forth herein.

It should be understood that any aspect of the present disclosure disclosed herein may be implemented by one or more elements of a claim. While specific feature combinations are described in the following with respect to certain aspects of the present disclosure, it is to be understood that not all features of the discussed examples must be present for realizing the technical advantages of the devices, systems, methods, and computer programs disclosed herein. Disclosed aspects may be modified by combining certain features of one aspect with one or more features of other aspects. A skilled person will understand that features, steps, components and / or functional elements of one aspect can be combined with compatible features, steps, components and / or functional elements of other aspect/s of the present disclosure.

The objective of this invention is solved by an efficient calculation of a maneuver-related property. This maneuver-related property gives information about the expected amount of traffic on a maneuver. This information is formed and/or contained within the network graph topology. The proposed method is dedicated to extract the information spread over the different map elements to determine the maneuver-specific data, easily useable by other processes, speeding up overall quality.

A road network according to the invention may comprise a set of nodes and a set of roads or road segments. Herein, we will refer to road segments (or any other part of the road between two nodes) simply as "roads". For instance, a node of the road network may be an intersection of two or more roads or a place where a road joins another road. The set of nodes and the set of roads may be represented as a graph according to discrete mathematics, wherein the set of roads corresponds to a set of edges and the set of nodes corresponds to a set of vertices. For instance, each of the roads of the set of roads may connect two nodes of the set of nodes. Furthermore, the network may be a directed network or an undirected network. Directed networks refer to networks with directed roads, which can only be driven on in one direction. Undirected networks refer to networks with undirected roads, which can be driven on in both directions. Alternatively, the network may comprise both directed and undirected roads. Furthermore, two nodes of the network may not be directly connected by a road or may be directly connected by one or more roads (similar to multigraphs in discrete mathematics). In one embodiment, a network comprising undirected roads may be transformed or presented as directed network where each of the undirected roads is represented by two parallel oppositely directed roads / edges.

A maneuver in the road network is a transition from one road of the road network to another road of the road network at a respective node of the road network connecting the two roads. A corresponding value may be associated with a maneuver of the road network, wherein the value may depend on predefined criteria. For example, a separate corresponding value may be associated with each maneuver or at least some of the maneuvers of the network. Furthermore, the value associated with a maneuver may be changed.

Similar to weighted graphs in discrete mathematics, a road network according to the invention may be weighted. In this case, a cost (also called weight) is associated with one or more roads of the network. For example, a cost may be associated with each road or at least some of the roads of the road network. The cost of a road may be based on at least one or more of a length of the road, an expected time traveling on the road, a power consumption traveling on the road, a toll fee for traveling on the road, a class of the road, etc.

In some embodiments, a path in the road network is a sequence of one or more roads which joins a sequence of nodes. One would recognize that routes in a road network may start and/or end at nodes or at locations along roads other than nodes. For the purposes of the description, we may assume the paths start and end at nodes. In other words, a path is a route along roads of the network starting at a node and ending at another node. For example, a path between a pair of nodes may start at a central node of the pair of nodes, may cross a sequence of one or more nodes and may end at a second node of the pair of nodes. There can be zero, one, or multiple paths between each pair of nodes in the network. If the network is weighted, a cost (also called weight) may be associated to one or more paths of the network. For instance, the cost of a path may be based on a cost associated with each road of the path. For example, the cost of a path may be equal to the sum of the costs associated with each road of the path.

A maneuver in the road network is part of the path if the maneuver is associated with a turn or transition, at a respective node, from a first road to a second road, with both the first and the second road being part of the path.

Maneuvers of a network may be ranked. For example, two or more maneuvers at a node may be ranked. The ranking of maneuvers may at least partially be based on their associated corresponding values or importance. The ranking of the maneuvers may correspond to probability that a driver driving from one node of the network to another node of the network will perform the respective maneuver. The ranking of the maneuvers may correspond to sorting the maneuvers in an ascending or descending order based on their associated values.

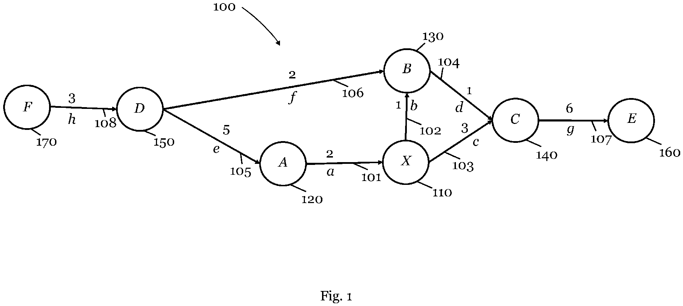

In Fig.1, a road network 100 is shown in accordance with various aspects of the present disclosure. The network 100 comprises a set of nodes, the nodes of the set of nodes are *X* 110, *A* 120, *B* 130, *C* 140, *D* 150, *E* 160, and *F* 170. The network further comprises a set of roads, the roads of the set of roads are *a* 101, *b* 102, *c* 103, *d* 104, *e* 105,*f* 106, *g* 107, and *h* 108. Each of the roads of the set of roads is associated with a cost. In the present example, the cost of *a* 101 is 2, the cost of *b* 102 is 1, the cost of *c* 103 is 3, the cost of *d* 104 is 1, the cost of *e* 105 is 5, the cost of *f* 106 is 2, the cost of *g* 107 is 6, and the cost of *h* 108 is 3. The network 100 is directed as indicated by the arrows at the end of each road. For example, driving opposite to the direction of the arrows of the roads may not be possible and/or may not be allowed. It is noted that unidirectional roads are shown here merely for the purpose of simplifying the explanations of the principles underlying the present disclosure. As already mentioned earlier, the present disclosure is also directed to a road network where each or part of the roads are bidirectional roads.

The road network 100 of Fig. 1 comprises multiple maneuvers. In the following, the maneuvers at node *X* 110 are considered. A first maneuver at node *X* 110 is defined by a turn from road *a* 101 to road *b* 102, and a second maneuver at node *X* 110 is defined by a turn from road *a* 101 to road *c* 103. In the following, the first maneuver will be denoted by *a*->*X*->*b*, and the second maneuver will be denoted by *a*->*X*->*c*.

The road network 100 comprises multiple paths. For instance, the pair of nodes *A* 120 and *C* 140 is connected by two paths. A first path from *A* 120 to *C* 140 comprises the roads *a* 101, *b* 102, and *d* 104, and a second path from *A* 120 to *C* 140 comprises the roads *a* 101 and *c* 103. In the following, the first path will be denoted by *A*->*a*->*X*->*b*->*B*->*d*->*C*, and the second path will be denoted by *A*->*a*->*X*->*c*->*C*.

The cost associated with a path of the road network 100 may be the sum of the costs associated with roads that form the path. Therefore, the cost of the first path *A*->*a*->*X*-*>b->B->d->C* may be the sum of the cost of the roads *a* 101, *b* 102, and *d* 104, implying that the cost associated with the first path is equal to 4. The cost of the second path *A*->*a*->*X*->*c*->*C* is the sum of the cost of the roads *a* 101 and *c* 103, implying that the cost associated with the second path is equal to 5.

The first maneuver *a*->*X*->*b* at node *X* 110 is part of the first path *A*->*a*->*X*->*b*->*B*->*d*->*C*. The second maneuver *a*->*X*->*c* at node *X* 110 is part of the second path *A*->*a*->*X*-*>c->C.*

Each of the first maneuver *a*->*X*->*b* and the second maneuver *a*->*X*->*c* may be associated with a value. As the first maneuver *a*->*X*->*b* is part of the first path *A*->*a*->*X*->*b*->*B*->*d*->*C*, a value associated with the first maneuver *a-*>X->b may be determined based on the cost associated with the first path. For instance, the value of the first maneuver may be equal to the cost of the first path, which means that a value of 4 may be associated with the first maneuver *a*->*X*->*b*. Similarly, as the second maneuver *a*->*X*->*c* is part of the second path *A*->*a*->*X*->*c*->*C*, a value associated with the second maneuver *a*->*X*->*c* may be associated with the cost associated with the second path. For instance, the value of the second maneuver may be equal to the cost of the second path, which means that a value of 5 may be associated with the second maneuver *a*->*X*->*c*.

Since the first maneuver and the second maneuver are also part of other paths of the network 100, the values associated with the first maneuver and the second maneuver may be changed when considering the road network as a whole, or the relevant part thereof. For example, if it is intended to determine the probability of a certain maneuver at node X considering all vehicles starting from any of the nodes from which node X can be reached, further evaluation of the maneuvers at node X should be made.

For instance, the first maneuver *a*->*X*->*b* is part of a first path from node *D* 150 to node *C* 140 given by *D*->*e*->*A*->*a*->*X*-*>b->B->d->C.* Since the cost of this path is 9, the value associated with the first maneuver may be changed to 9. Similarly, the second maneuver *a*->*X*->*c* is part of a second path from node *D* 150 to node *C* 140 given by *D*->*e*->*A*->*a*->*X*->*c*->*C*. Since the cost of this path is 10, the value associated with the second maneuver may be changed to 10.

The first maneuver *a*->*X*->*b* and the second maneuver *a*->*X*->*c* may be ranked based on their associated values. If the value associated with the first maneuver is larger than the value associated with the second maneuver, the first maneuver may be ranked higher or lower than the second maneuver. For instance, if a value of 4 is associated with the first maneuver *a*->*X*->*b* and a value of 5 is associated with the second maneuver *a*->*X*->*c*, the first maneuver *a*->*X*->*b* may be ranked higher than the second maneuver *a*->*X*->*c*. For example, the ranking of 4 (vs. 5) indicates that the first maneuver is more likely than the second maneuver. This information allows a navigation device to assess how many vehicles on road *a* may turn to road *b*, compared to how many may turn to road *c*. Thus, the paths proposed and/or predictions made by the navigation device will become better and more accurate. Additionally, such information enables the navigation device to propose paths quicker and with less computational power.

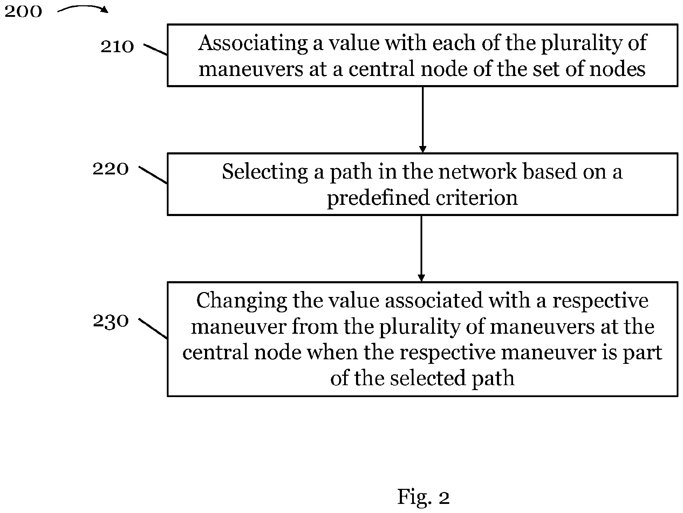

In Fig. 2, a process flow 200 in accordance with various aspects of the present disclosure is shown. The process flow 200 may provide for a more accurate ranking of maneuvers at a reduced processing time compared to known methods. To rank maneuvers in a network, the process flow 200 comprises associating 210 a value with each of the plurality of maneuvers at a central node of the set of nodes; selecting 220 a path in the network based on a predefined criterion; and changing 230 the value associated with a respective maneuver from the plurality of maneuvers at the central node when the respective maneuver is part of the selected path.

To rank the first maneuver *a*->*X*->*b* and the second maneuver *a*->*X*->*c* at the node *X* 110 of the road network 100 according to the process flow 200, a value is associated 210 with each of the first maneuver and the second maneuver at the node *X* 110 that in this example is regarded as the first and central node of the set of nodes. According to an embodiment, the value associated with a maneuver may be equal to the cost of the paths consisting of the roads of that particular maneuver. In this case, the value associated with the first maneuver *a*->*X*->*b* may be equal to the cost of the path *A*->*a*->*X*->*b*->*B*, which is 4. Similarly, the value associated with the second maneuver *a*->*X*->*c* may be equal to the cost of the path *A*->*a*->*X*->*c*->*C*, which is 5. In one embodiment, the values associated with the maneuvers at the node selected to be first or central node, at 210, are initial values that may be chosen based on other arbitrary criteria. For example, they may be associated with a pre-defined minimum value.

To further evaluate (and/or rank) the maneuvers at node X according to the process flow 200, a path in the network is selected 220 based on a predefined criterion. In a preferred embodiment, the selected path may be the path having highest costs, and may also be the longest, among all paths of a set of paths, wherein each path of the set of paths fulfills two conditions: (i.) each path of the set of paths comprises the same maneuver at node *X*; and (ii.) each path of the set of paths has a cost lower than or equal to any other path between a starting node of the path and a target node (also called ending node) of the path.

In the exemplar network 100 (Fig. 1), the set of paths may comprise the three paths
*A*->*a*->*X*->*b*->*B*,
*A*->*a*->*X*->*b*->*B*->*d*->*C*,
*A*->*a*->*X*->*b*->*B*->*d*->*C*->*g*->*E*
This is because the three paths comprise the first maneuver *a*->*X*->*b* and are the paths having a cost lower than any other path between the nodes *A* and *B, A* and *C*, and *A* and *E*, respectively. The set of paths does not comprise a path from node *D* to any of nodes *B, C*, or *E*. This is because the paths having a cost lower than any other path between these nodes are *D*->*f*->*B, D*->*f*->*B*->*d*->*C*, *and D-*>*f*->*B*->*d*->*C*->*g*->*E*, which do not comprise the first maneuver *a*->*X*->*b*. The costs associated with the paths *A*->*a*->*X*-*>b->B, A*->*a*->*X*-*>b->B->d->C,* and *A*->*a*->*X*-*>b->B->d->C->g->E* are 3, 4, and 10, respectively. Therefore, the selected path, i.e., the path having highest costs among all paths of a set, is*A-*>*a*->*X*->*b*->*B*->*d*->*C*->*g*->*E*, which has a cost of 10.

According to the process flow 200, the value associated with a respective maneuver from the plurality of maneuvers at the central node is changed 230 when the respective maneuver is part of the selected path. Since the first maneuver *a*->*X*->*b* is part of the selected path *A*->*a*->*X*-*>b->B->d->C->g->E,* the value associated with the first maneuver *a*->*X*->*b* is changed. In a preferred embodiment, the value associated with the first maneuver *a*->*X*->*b* may be changed to the cost of the selected path, i.e., the value associated with the first maneuver is changed to 10.

The network 100 does not comprise a path that fulfills the two conditions: (i.) comprising the second maneuver *a*->*X*->*c* at node *X*; and (ii.) having a cost lower than any other path between the starting node of the path and the target node of the path. Therefore, the value associated with second maneuver *a*->*X*->*c* may not be changed, and in a preferred embodiment, the value may remain equal to 4.

In an embodiment, the maneuvers at node *X* may be ranked based on the value associated with each of the first and the second maneuver. For example, the first maneuver *a*->*X*->*b* may be ranked higher than the second maneuver *a*->*X*->*c* since the value associated with the first maneuver (10) is higher than the value associated with the second maneuver (4). The rationale of this particular ranking is that there may be a correlation between the value associated with a maneuver and an expected number of devices taking this maneuver. For instance, if the costs associated with roads are the lengths of the respective roads, the value of a maneuver may be the length of a shortest path comprising the maneuver. Thus, maneuvers with higher associated value are included in the preferred (shortest) paths between more and more distant nodes, where more alternative but more costly connecting paths are available. In this case, the expected number of vehicles or devices of travelers taking the maneuver may tend to be higher for a maneuver with a larger associated value compared to a maneuver with a smaller associated value. Such a ranking allows to assess whether the number of vehicles on road *a* that may turn to road b is larger than the number of vehicles on road *a* that may turn to road c, e.g., to reach node C.

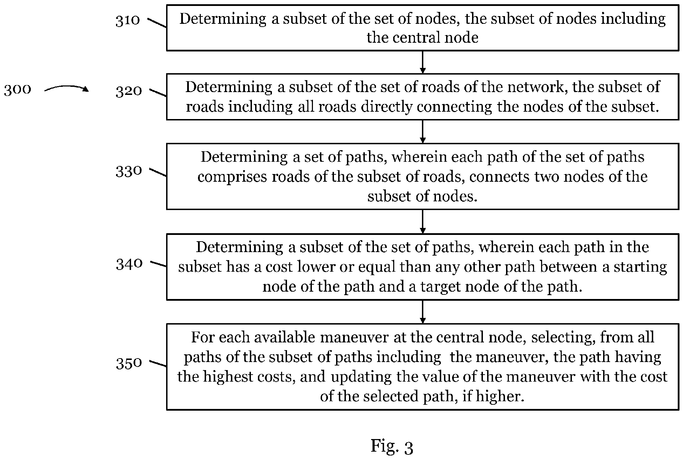

In Fig. 3, a process flow 300 is shown that further details the process of ranking maneuvers in the road network based on a predefined criterion according to a preferred embodiment. The shown method may lead to an improved ranking of maneuvers at reduced processing time.

To select a path in the network 100 according to the process flow 300, a subset of the set of nodes may be determined 310, wherein the subset of nodes includes the central node X. In an embodiment, the subset of nodes may be determined to further comprise one or more of the nodes (also called neighboring nodes) adjacent to the central node X, e.g., nodes that are connected directly with the central node. For instance, in the road network 100, the nodes *A* 120, *B* 130, and *C* 140 are the nodes adjacent to the central node X. In a preferred embodiment, the subset may be equal to the central node X and its adjacent nodes. For instance, in the road network 100, the subset may include the nodes *X* 110, *A* 120, *B* 130, and *C* 140.

According to the process flow 300, a subset of the set of roads may be determined 320, the subset of roads including all roads of the road network that directly connect nodes of the subset of nodes. For instance, in case of the road network 100 and the determined subset of nodes, the subset of roads may comprise the roads *a* 101, *b* 102, *c* 103, and *d* 104.

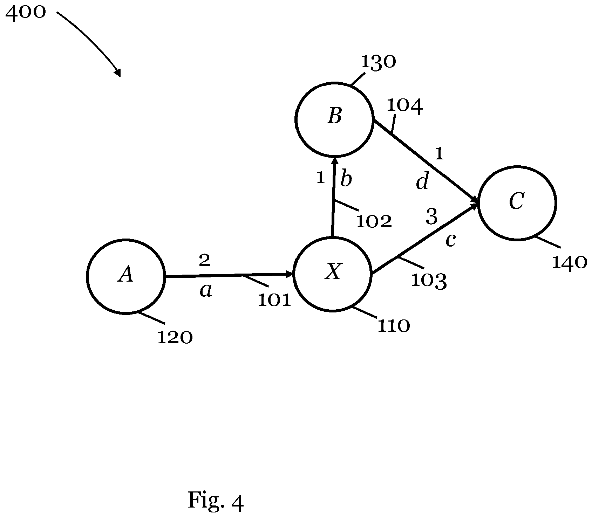

A network 400 comprising the nodes of the subset of nodes and the roads of the subset of roads is shown in Fig. 4.

According to the process flow 300, a set of paths may be determined 330, wherein each path of the set of paths comprises roads of the subset of roads and connects two nodes of the subset of nodes. For instance, assume that the subset of nodes includes *X* 110, *A* 120, *B* 130, and *C* 140 and the subset of roads includes *a* 101, *b* 102, *c* 103, and *d* 104, cf. Fig. 4. Then, the set of paths includes the paths:
*X->b->B,*
*X*->*c*->*C*,
*A*->*a*->*X*,
*A*->*a*->*X*->*b*->*B*,
*A*->*a*->*X*->*b*->*B*->*d*->*C*,
*A*->*a*->*X*->*c*->*C*, and
*B*->*d*->*C*.

In a preferred embodiment, the paths that start or end at the central node may be excluded. Additionally, the paths that comprise only one road may be excluded. Thus, the set of paths may be reduced to:
*A*->*a*->*X*->*b*->*B*,
*A*->*a*->*X*->*b*->*B*->*d*->*C*, and
*A*->*a*->*X*->*c*->*C*.

According to the process flow 300, a subset of the set of paths may be determined 340, wherein each path in the subset has a cost lower than (or equal to) any other path between a starting node of the path and a target node of the path. For instance, when the subset of nodes includes *X* 110, *A* 120, *B* 130, and *C* 140 and the subset of roads includes *a* 101, *b* 102, *c* 103, and *d* 104, according to the example illustrated with Fig. 4, the subset of paths includes the paths:
*A*->*a*->*X*-*>b->B* and
*A*->*a*->*X*->*b*->*B*->*d*->*C*.
Each of these paths having a cost lower than the cost of any other path between a starting node of the path and a target node of the path. Accordingly, from the two possible paths between nodes A and C, the path *A*->*a*->*X*->*b*->*B*->*d*->*C* with cost 4 is added to the subset instead of the path *A*->*a*->*X*->*c*->*C* that has a higher cost of 5, respectively.

In one embodiment, the subset of paths may be determined by directly applying a shortest path search algorithm over the map for each nodes pair of the subset of nodes, e.g., excluding the central node. Thus, the actions at 330 and 340 as illustrated in Fig. 3 may be reduced to directly determining the shortest paths between the nodes of the subset of nodes.

In a preferred embodiment, a cost of a path having a cost lower than (or equal to) any other path between a given starting node and a given target or destination node of the path may be stored for this starting-target nodes pair. For instance, the cost may be stored, e.g., as a table, a matrix, or alike. This may save computational cost, computational time, and/or alike since if the cost of the lowest cost path is required again (e.g., for different central nodes or different maneuvers), it can be retrieved from the storage and does not have to be computed again.

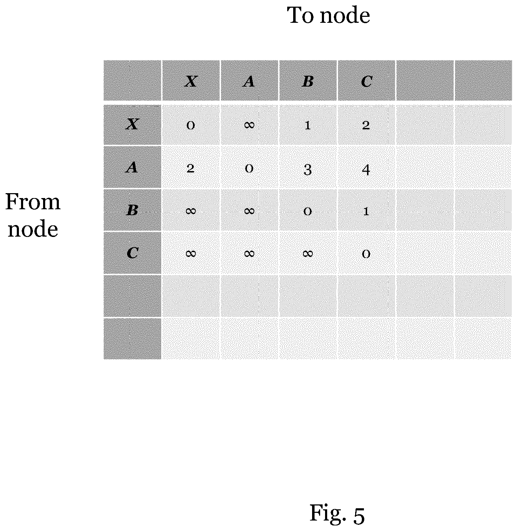

For instance, referring back to Fig. 3 and Fig. 4, the costs of the shortest paths connecting the nodes of the subset may be stored in a table similar or equal to the table shown in Fig. 5, wherein the rows may indicate the starting nodes and the columns may indicate the target nodes, respectively. As illustrated, the table or matrix in Fig. 5 has a row and a column corresponding to each of the nodes in the subset (see Fig. 4) that may be ordered symmetrically starting with the central node, according to one embodiment. In this table, the entry in the second row (corresponding to node A) and the third column (corresponding to node B) stores the cost of the path between nodes A and B having the lowest cost *A*->*a*->*X*->*b*->*B*, namely, 3. Similarly, the entry in the second row (node A) and the fourth column (node C) stores the cost of the path between nodes A and C having the lowest cost *A*->*a*->*X*->*b*->*B*->*d*->*C*, namely, 4.

Referring back to Fig. 3, at 350, for each maneuver that is possible at the central node X, the paths of the subset of paths including the maneuver are determined. Thus, for example, the maneuver *a*->*X*->*b* is part of the paths *A-*>*a*->*X*->*b*->*B*, *and A*->*a*->*X*->*b*->*B*->*d*->*C*. Further, from the paths including the maneuver, the path with the highest cost is selected. Respectively in the example illustrated with Fig. 4, path *A*->*a*->*X*->*b*->*B*->*d*->*C* is selected as having a cost higher than the cost of path *A*->*a*->*X*->*b*->*B*.

In one embodiment, at 350, the value of a maneuver is updated to the value or the cost of the path with the highest cost among the paths of the subset of paths that include the maneuver. Accordingly, the values associated with the maneuver *a*->*X*->*b* will be changed from 3 as initially calculated at 210 (see Fig. 2) to 4, which is the cost of the selected path *A*->*a*->*X*->*b*->*B*->*d*->*C*. The initial value of the maneuver *a*->*X*->*c* will not be updated as this maneuver is not included in any of the paths included in the subset of paths as determined at 340.

In an embodiment, information whether a particular maneuver is part of a path having a cost lower than or equal to any other path between a starting node of the path and a target node of the path may be also stored. In a preferred embodiment, this information may be stored together with the cost of the path, for instance in a table, a matrix, or alike.

For instance, the path *A*->*a*->*X*->*b*->*B* has a cost lower than any other path between node *A* and node *B* and the path *A*->*a*->*X*-*>b->B->d->C has* a cost lower than any other path between node *A* and node *C*. Then, it may be stored that the maneuver *a*->*X*->*b* is part of the paths *A*->*a*->*X*->*b*->*B* and*A-*>*a*->*X*->*b*->*B*->*d*->*C*.

In a preferred embodiment, the process to rank the maneuvers in the road network may be performed several times, expanding the subset of the set of nodes, further changing the value or values associated with the involved maneuver or maneuvers at the central node. This may further improve the quality of the ranking of the maneuvers.

According to the process flow 300, a second subset of the set of nodes may be determined 310, wherein the second subset of nodes includes the central node X. In an embodiment, the second subset of nodes may comprise the nodes of the subset of nodes and at least one additional node. For instance, the additional node may be adjacent to the subset of nodes. In an embodiment, the additional node may be selected based on a cost of a lowest cost path between the additional node and the central node. For instance, if the subset of nodes includes *X* 110, *A* 120, *B* 130, and *C* 140, the second subset of nodes may include *X* 110, *A* 120, *B* 130, *C* 140, and *D* 150 since the lowest cost path connecting *X* 110 and *D* 150 has a lower cost than the lowest cost paths connecting *X* 110 and *E* 160 or *X* 110 and *F* 170, respectively. In other embodiments the node or nodes added to the initial subset of nodes to form the second subset of nodes may be selected based on criteria other than cost. For example, the nodes neighboring, e.g. directly connected to the nodes of the initial subset may be added clockwise, alphabetically, based on orientation, etc.

According to the process flow 300, a second subset of the set of roads may be determined 320, the second subset of roads including all roads of the road network that directly connect nodes of the second subset of nodes. For instance, in case of the road network 100 and the determined second subset of nodes, the second subset of roads may comprise the roads *a* 101, *b* 102, *c* 103, *d* 104, *e* 105, and*f*106.

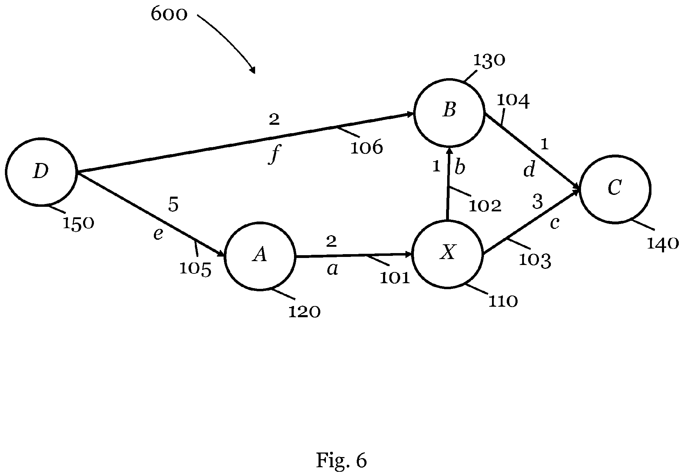

A network 600 comprising the nodes of the subset of nodes and the roads of the subset of roads is shown in Fig. 6.

According to the process flow 300, a second set of paths may be determined 330, wherein each path of the second set of paths comprises roads of the second subset of roads and connects two nodes of the second subset of nodes. For instance, assume that the second subset of nodes includes *X* 110, *A* 120, *B* 130, *C* 140, and *D* 150, and the second subset of roads includes *a* 101, *b* 102, *c* 103, *d* 104, *e* 105, and *f* 106, cf. Fig. 6. Then, the second set of paths includes all paths shown in Fig. 6.

In a preferred embodiment, the paths that start or end at the central node may be excluded. Additionally, the paths that comprise only one road may be excluded. Thus, the second set of paths may be reduced to:
*A*->*a*->*X*->*b*->*B*,
*A*->*a*->*X*->*b*->*B*->*d*->*C*,
*A*->*a*->*X*->*c*->*C*,
*D*->*e*->*A*->*a*->*X*->*b*->*B*,
*D*->*e*->*A*->*a*->*X*->*b*->*B*->*d*->*C*,
*D*->*A*->*a*->*X*->*c*->*C*, and
*D->f->B->d->C.*

According to the process flow 300, a second subset of the second set of paths may be determined 340, wherein each path in the second subset has a cost lower than (or equal to) any other path between a starting node of the path and a target node of the path. For instance, when the second subset of nodes includes *X* 110, *A* 120, *B* 130, *C* 140, and *D* 150, and the second subset of roads includes *a* 101, *b* 102, *c* 103, *d* 104, *e* 105, and *f* 106, according to the example illustrated in Fig. 6, the second subset of paths includes the paths:
*A*->*a*->*X*->*b*->*B*,
*A*->*a*->*X*->*b*->*B*->*d*->*C*, and
*D->f->B->d->C.*
Each of these paths having a cost lower than the cost of any other path between a starting node of the path and a target node of the path. The path *D*->*e*->*A*->*a->X->b->B* is not included in the subset due to its cost of 8 being greater than the cost of the path *D->f->B,* which is 2. Similarly, the path *D*->*e*->*A*->*a*->*X->b->B->d->C* is not included in the subset due to its cost of 9 being greater than the cost of the path *D*->*f*-*>B->d->C,* which is 3.

In one embodiment, the subset of paths may be determined by directly applying a shortest path search algorithm over the map for each nodes pair of the second subset of nodes, e.g., excluding the central node. Thus, the actions at 330 and 340 as illustrated in Fig. 3 may be reduced to directly determining the shortest paths between the nodes of the subset of nodes.

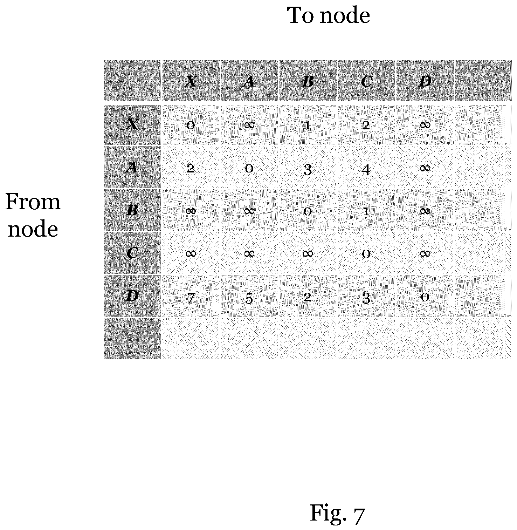

According to a preferred embodiment, the costs of the lowest cost paths are stored. For instance, the costs are added to the previous table shown in Figure 5. The table with the newly added costs is shown in Fig. 7. In this table, the entries in the fifth row indicate the cost of the lowest cost paths *D*->*e*->*A-*>*a*->*X*, *D*->*e*->*A*, *D*->*f*->*B*, and *D*->*f*->*B*->*d*->*C* with a cost of 7, 5, 2, and 3, respectively. In subsequent steps, these costs can be retrieved from the table to avoid unnecessary recomputation of the costs. In a preferred embodiment, it may be stored that the maneuver *a*->*X*->*b* is part of the of the lowest cost paths *A*->*a*->*X*->*b*->*B*->*d*->*C*, which connects the nodes *A* and *C*. For instance, this may be stored in the table, matrix, or alike that stores the determined paths with the lowest cost (not shown in Fig. 7).

Referring back to Fig. 3, at 350, for each maneuver that is possible at the central node *X,* the paths of the subset of paths including the maneuver are determined. Thus, for example, the maneuver *a*->*X*->*b* is part of the paths *A-*>*a*->*X*->*b*->*B*, *and A*->*a*->*X*->*b*->*B*->*d*->*C*. Further, from the paths including the maneuver, the path with the highest cost is selected. Respectively in the example illustrated with Fig. 6, path *A*->*a*->*X*->*b*->*B*->*d*->*C* is selected as having a cost higher than the cost of path *A*->*a*->*X*->*b*->*B*.

In one embodiment, at 350, the value of a maneuver is updated to the value or the cost of the path with the highest cost among the paths of the second subset of paths that include the maneuver. Accordingly, the values associated with the maneuver *a*->*X*->*b* will remain 4, which is the cost of the selected path *A*->*a*->*X*->*b*->*B*->*d*->*C*. The initial value of the maneuver *a*->*X*->*c* will not be updated as this maneuver is not included in any of the paths included in the second subset of paths as determined at 340.

In a preferred embodiment, the process to rank the maneuvers in the road network may be performed several times, expanding the subset of the set of nodes, further changing the value or values associated with the available respective maneuver or maneuvers. This may further improve the quality of the ranking of the maneuvers.

According to the process flow 300 shown in Fig. 3, a third subset of the set of nodes may be determined 310, wherein the third subset of nodes includes the central node *X.* For example, the third subset of nodes may include all nodes of the second subset of nodes and at least one further node. Preferably, the further node may be adjacent to a node of the second subset of nodes. For instance, if the subset of nodes includes *X* 110, *A* 120, *B* 130, *C* 140, and *D* 150, then the third subset of nodes may include *X* 110, *A* 120, *B* 130, *C* 140, *D* 150, and *E* 160 since the lowest cost path connecting *X* 110 and *E* 160 has a lower cost than the lowest cost paths connecting *X* 110 and *F* 170. In other embodiments the node or nodes added to the initial subset of nodes to form the second subset of nodes may be selected based on criteria other than cost. For example, the nodes neighboring, e.g. directly connected to the nodes of the initial subset may be added clockwise, alphabetically, based on orientation, etc.

According to the process flow 300, a third subset of the set of roads may be determined 320, the third subset of roads including all roads of the road network that directly connect nodes of the third subset of nodes. For instance, if the third subset of nodes includes *X* 110, *A* 120, *B* 130, *C* 140, *D* 150, and *E* 160, then the third subset of roads may comprise the roads *a* 101, *b* 102, *c* 103, *d* 104, *e* 105, *f* 106, and *g* 107.

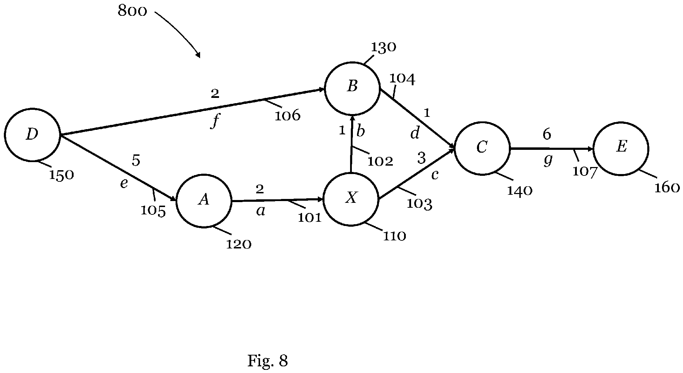

A road network comprising the nodes of the third subset of nodes and the roads of the third subset of roads is shown in Fig. 8.

According to the process flow 300, a third set of paths may be determined 330, wherein each path of the third set of paths comprises roads of the third subset of roads and connects two nodes of the third subset of nodes. For instance, assume that the third subset of nodes includes *X* 110, *A* 120, *B* 130, *C* 140, *D* 150, and *E* 160 and the third subset of roads includes *a* 101, *b* 102, *c* 103, *d* 104, *e* 105, *f* 106, and *g* 107, cf. Fig. 8. Then, the third set of paths includes all paths shown in Fig. 8.

In a preferred embodiment, the paths that start or end at the central node may be excluded. Additionally, the paths that comprise only one road may be excluded. Thus, the second set of paths may be reduced to:
*A*->*a*->*X*->*b*->*B*,
*A*->*a*->*X*->*b*->*B*->*d*->*C*,
*A*->*a*->*X*->*b*->*B*->*d*->*C*->*g*->*E*,
*A*->*a*->*X*->*c*->*C*,
*D*->*e*->*A*->*a*->*X*->*b*->*B*,
*D*->*e*->*A*->*a*->*X*->*b*->*B*->*d*->*C*,
*D*->*e*->*A*->*a*->*X*->*b*->*B*->*d*->*C*->*g*->*E*,
*D*->*A*->*a*->*X*->*c*->*C*,
*D*->*A*->*a*->*X*->*c*->*C*->*g*->*E*,
*D*->*f*->*B*->*d*->*C*, and
*D*->*f*->*B*->*d*->*C*->*g*->*E*.

According to the process flow 300, a third subset of the third set of paths may be determined 340, wherein each path in the third subset has a cost lower than any other path between a starting node of the path and a target node of the path. For instance, when the third subset of nodes includes *X* 110, *A* 120, *B* 130, *C* 140, *D* 150, and *E* 160, and the third subset of roads includes *a* 101, *b* 102, *c* 103, *d* 104, *e* 105, *f* 106, and *g* 107, according to the example illustrated in Fig. 8, the third subset of paths includes the paths:
*A*->*a*->*X*->*b*->*B*,
*A*->*a*->*X*->*b*->*B*->*d*->*C*,
*A*->*a*->*X*->*b*->*B*->*d*->*C*->*g*-*>E*,
*D*->*f*->*B*->*d*->*C*, and
*D*->*f*->*B*->*d*->*C*->*g*->*E*.

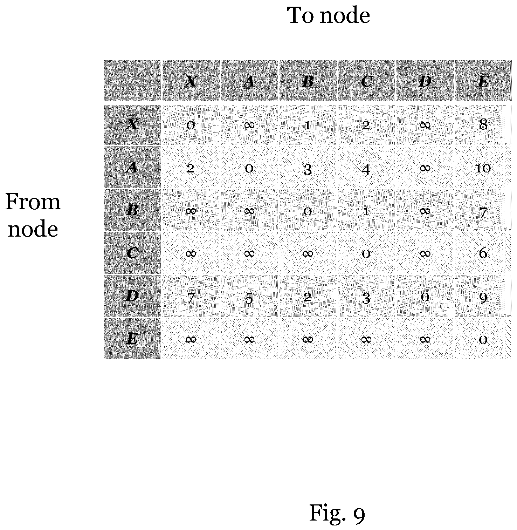

Each of these paths having a cost lower than the cost of any other path between a starting node of the path and a target node. According to an embodiment, the costs of the lowest cost paths are stored. For instance, the costs are added to the previous table shown in Figure 7. The table with the newly added costs is shown in Fig. 9. In this table, the entries in the six column indicate the cost of the lowest cost paths *X->b->B->d->C->g->E, A*->*a*->*X*-*>b- >B->d->C->g->E, B*->*d*->*C*->*g*->*E*, *C->g->E, D*->*f*-*>B->d->C->g->E,* with a cost of 8, 10, 7, 6, and 9, respectively. In a preferred embodiment, it may be stored that the maneuver *a*->*X*->*b* is part of the lowest cost paths *A*->*a*->*X*->*b->B->d->C->g->E,* which connects the nodes *A* and E. For instance, this may be stored in the table, matrix, or alike that stores the determined paths with the lowest cost (not shown in Fig. 9).

In Fig. 3, at 350, for each maneuver that is possible at the central node X, the paths of the subset of paths including the maneuver are determined. Thus, for example, the maneuver *a*->*X*->*b* is part of the paths *A*->*a*->*X*->*b*->*B*, *A*->*a*->*X*->*b*->*B*->*d*->*C*, and *A*->*a*->*X*->*b*->*B*->*d*->*C*->*g*->*E*. Further, from the paths including the maneuver, the path with the highest cost is selected. Respectively in the example illustrated with Fig. 8, path *A*->*a*->*X*->*b*->*B*->*d->C->g->E* is selected as having a cost higher than the cost of the path*A*->*a*->*X->b->B* and the cost of the path *A*->*a*->*X*->*b*->*B*-*>d*->*C*.

In one embodiment, at 350, the value of a maneuver is updated to the value or the cost of the path with the highest cost among the paths of the third subset of paths that include the maneuver. Accordingly, the values associated with the maneuver *a*->*X*->*b* will be changed from 4 to 10, which is the cost of the selected path *A*->*a*->*X*->*b*->*B*->*d*->*C*->*g*->*E*. The initial value of the maneuver *a*->*X*->*c* will not be updated as this maneuver is not included in any of the paths included in the third subset of paths as determined at 340.

In an embodiment, if the value of a maneuver exceeds a threshold, the value of the maneuver may be set to a predefined value. Additionally, the value of the maneuver may not be changed. For instance, the threshold and the predefined value for the maneuver *a*->*X*->*b* may be 8 and 100, respectively. Therefore, if the value of the maneuver *a*->*X*->*b* was changed to 10, which is higher than the threshold 8, the value of the maneuver *a*->*X*->*b* may be set to 100. Thus, the value of the maneuver *a*->*X*->*b* may not be changed anymore, e.g., no further checks for paths comprising the maneuver would to be done. The values of *a*->*X*->*b* and *a*->*X*->*c* may be fixed to 100 and 5, respectively (e.g., when the value of *a*->*X*->*c* maneuver is not expected to change, as illustrated by the above examples). The value of a maneuver that remains at its initial value may be set to a minimum value, e.g., o.

In an embodiment, associating values with maneuvers at a central node and changing these values may be performed in an iterative algorithm. In an initial step, a value may be associated with each maneuver at the central node. In a first iterative step, a first subset of the set of nodes may be selected. For instance, the first subset may comprise the central node and adjacent nodes of the central node. Based on this first subset, the value of each maneuver at the central node may be changed. In a second iterative step, a second subset of the set of nodes may be selected. For instance, the second subset may comprise the nodes of the first subset and a node adjacent to the nodes of the first subset. Based on this second subset, the values of maneuvers at the central node may be changed. This iterative approach of changing the values of the maneuvers at based on subset of nodes may be performed until the iterative algorithm terminates. This implies that in the *i*+1-th iterative step, the *i*+1-th subset of the set of nodes may comprise the nodes of *i*-th subset of nodes and a node adjacent to the nodes of the i-th subset of nodes. Furthermore, in the *i*+1-th iterative step, the value of each maneuver at the central node may be changed based on the *i*+1-th subset of the set of nodes. In other words, per iteration, the subset of nodes spreads incrementally with adding further nodes indirectly connected to the central node.

In a preferred embodiment, the iterative algorithm may be modified such that if a value of a maneuver exceeds a threshold, then the value of the maneuver may be set to a predefined value. Furthermore, in the next iterative steps, the value of the maneuver may not be changed.

In a preferred embodiment, in each iterative step, a table, a matrix, or alike storing the costs of lowest cost path connecting the nodes of the subset of nodes is updated. In the subsequent iterative steps, these costs can be retrieved from the table, the matrix, or alike and do not have to be recomputed.

Furthermore, the table, the matrix or like may comprise information about which maneuvers are part of which lowest cost path. The iterative may be modified such that if it becomes evident (based on this information stores in a table, the matrix, or alike) that a maneuver will not be part of a new lowest cost path in the next iterative steps, the value of the maneuver is fixed and the maneuver is neglected in the remaining iterative steps.

In a preferred embodiment, iterations may stop once the value of a particular maneuver stops changing, for instance because the associated node is no longer involved in new shortest paths.

The values of the maneuvers under consideration can be collected from the processing steps, e.g., to use them as estimations and/or as proxies for expected traffic volumes at the maneuvers. Furthermore, they can be made available to other methods and/or apparatus.

The afore-mentioned concepts may for example be implemented in a computer-implemented method for navigating a vehicle or user from a starting point to a destination point. The method may for example determine a certain path through a road network, and determine, based on a likelihood, the expected traffic at certain roads. For example, the computer-implemented method for navigation may comprise, in a road network, the road network comprising a set of nodes and a set of roads, where each of the roads of the set of roads is arranged to connect two nodes of the set of nodes:
associating a value with each of the plurality of maneuvers at a central node of a set of nodes;
selecting a path between a pair of nodes of the set of nodes in the road network based on a predefined criterion;
changing the value associated with a respective maneuver from the plurality of maneuvers at the central node when the respective maneuver is part of the selected path; and based on the value associated with the respective maneuver, provide navigation information to a user.

## Claims

1. A computer implemented method to rank a plurality of maneuvers in a road network, the road network comprising a set of nodes and a set of roads, where each of the roads of the set of roads is arranged to connect two neighboring nodes of the set of nodes,
the method comprising:
associating a value with each of one or more maneuvers available at a central node of the set of nodes;
selecting a path between a pair of nodes of the set of nodes based on a predefined criterion; and
changing the value associated with a respective maneuver from the one or more maneuvers at the central node when the respective maneuver is part of the selected path.

2. The computer-implemented method of claim 1, wherein the method further comprises:
ranking the plurality of the maneuvers in the road network based on the value associated with the each of the plurality of maneuvers.

3. The computer-implemented method of any of claims 1 or 2, wherein the predefined criterion is based on a cost associated with the path between the pair of nodes.

4. The computer-implemented method of claim 3, wherein the cost associated with the path is based on one or more of: a length of the path, an expected time traveling on the path, a power consumption traveling on the path, and a toll fee for traveling on the path.

5. The computer-implemented method of any of claim 3 to 4, wherein a cost of a path between the pair of nodes is retrieved from a matrix or determined based on the matrix.

6. The computer-implemented method of any of claims 3 to 5, wherein changing the value associated with the respective maneuver is based on the cost associated with the selected path.

7. The computer-implemented method of any of the preceding claims, wherein, when the respective maneuver is not part of the selected path, the value associated with the respective maneuver is not changed.

8. The computer-implemented method of any of the preceding claims, wherein the method further comprises:
- determining a subset of the set of nodes, the subset of nodes including the central node;
- determining a subset of the set of roads of the network, the subset of roads including all roads directly connecting the nodes of the subset;
- determining a set of paths, wherein each path of the set of paths comprises one or more roads of the subset of roads and connects two nodes of the subset of nodes; and
- determining a subset of the set of paths, wherein each path in the subset has a cost lower than or equal to any other path between a same starting node of the path and a same target node of the path.

9. The computer-implemented method of claim 8, wherein the method further comprises:
- for each available maneuver at the central node, selecting, from all paths of the subset of paths including the maneuver, the path having the highest costs, and updating the value associated with the maneuver based on the cost of the selected path.

10. The computer-implemented method of any of the preceding claims, wherein changing the value does not decrease the value.

11. The computer-implemented method of any of the preceding claims, wherein changing the value associated with a respective maneuver further comprises: if the value exceeds a threshold, the value is set to a predefined value.

12. The compute implemented method of claim 11, wherein the respective maneuver is excluded from further updates when the associated value is set to the predefined value.

13. The computer-implemented method of any of the preceding claims, wherein each of the plurality of maneuvers in the road network is a transition from a first road of the road network to a second road of the road network at a node of the road network.

14. An apparatus for ranking maneuvers in a road network, the apparatus comprising at least one processing unit configured to perform the method according to any of the previous claims.
